Europäisches Patentamt

European Patent Office

Office européen des brevets

(11) Publication number: **0 154 732**
**A1**

(12) **EUROPEAN PATENT APPLICATION**

(21) Application number: **84301558.7**

(22) Date of filing: **08.03.84**

(51) Int. Cl.⁴: **A 63 B 21/00**

(43) Date of publication of application: **18.09.85**
Bulletin 85/38

(84) Designated Contracting States: **BE CH DE FR GB IT LI NL SE**

(71) Applicant: **McKillip, James Boyd, 15243 Vanowen Street, Van Nuys California 91405 (US)**
Applicant: **Brown, Edmund James, 3186 North Rossini, Topanga California 90290 (US)**

(72) Inventor: **McKillip, James Boyd, 15243 Vanowen Street, Van Nuys California 91405 (US)**
Inventor: **Brown, Edmund James, 3186 North Rossini, Topanga California 90290 (US)**

(74) Representative: **Warren, Keith Stanley et al, BARON & WARREN 18 South End Kensington, London W8 5BU (GB)**

(54) Physical therapy apparatus.

(57) A physical therapy apparatus is disclosed which is adapted to provide a back and forth exercising movement to a portion of the user's body, with the resistance to such back and forth movement being separately adjustable in each direction. Also, the frame of the apparatus includes a number of adjustable interconnections (27, etc) which permit the lever arm (35, 36) to be positioned in a wide variety of planes and positions so as to permit exercise of various portions of the body, and a sleeve (50) on the frame mounts a horizontal bracket for attaching the apparatus to a bed frame or other horizontal surface.

-1-

PHYSICAL THERAPY APPARATUS

The present invention relates to a physical therapy apparatus which is adapted to provide adjustable exercise resistance for various portions of a user's body.

Various exercising devices have been developed for providing a back and forth exercising movement to a portion of a user's body, as represented for example by the prior U.S. Patent Nos. 2,777,439; 2,855,199; and 3,465,592. However, such prior devices are generally of complicated and expensive construction, they do not provide a readily adjustable resistance force in each direction of movement, and the orientation of the exercising motion of the devices is not readily adjustable to a wide variety of positions, which is necessary to permit various portions of the user's body to be exercised.

It is accordingly an object of the present invention to provide a physical therapy apparatus of simple and inexpensive construction, and which is adapted to provide a back and forth exercising movement to a portion of the user's body, with the resistance to such back and forth movement being separately adjustable in each direction, and such that the resistance to exercising movement in one direction may differ from the resistance in the other direction.

It is a more particular object of the present invention to provide a physical therapy apparatus which provides means for visually displaying the established resistance to movement in each direction of movement, so as to facilitate the initial set up of the apparatus and repeatability of the exercise program for a particular user.

It is still another object of the present invention to provide a physical therapy apparatus of the described type and which has the ability to be oriented in a variety of positions so as to permit exercise of various portions of the body, such as the head, arms, or legs of the user, or portions or combinations thereof.

It is a more particular object of the present invention to provide a physical therapy apparatus of the described type which is readily transportable by being rolled along the ground surface, and which may be readily attached to a bed or other horizontal surface during use.

These and other objects and advantages of the present invention are achieved in the embodiment illustrated herein by the provision of a physical therapy apparatus which comprises a supporting frame, a shaft rotatably mounted to the supporting frame, and a lever arm fixed to the shaft and extending radially therefrom, with the lever arm having a free end adapted for engagement by the user and so that the user may pivot the lever arm and shaft about the axis of the shaft in a back and forth manner. Further, there is provided means for imparting an adjustable resistance to the movement of the lever arm in at least one, and preferably both, of its back and forth directions. This resistance imparting means comprises a pair of discs coaxially disposed about the shaft, a first one way clutch for rotating one of the discs with the shaft only upon rotation of the shaft in one direction, and a second one way clutch for rotating the other disc with the shaft only upon rotation of the shaft in the other direction. First and second disc engaging means are disposed adjacent respective ones of the discs for frictionally engaging the surface thereof, with each of the disc engaging means including means for separately adjusting the force of the frictional engagement with the surface of the associated disc so as to provide a separately adjustable resistance to the rotation of each disc, and thereby provide a separately adjustable resistance to movement of the lever arm in each direction.

In the preferred embodiment, each of the disc engaging means comprises a piston, and a cylinder slideably mounting the piston therein for movement toward and away from the associated disc. Further, there is provided a hydraulic fluid filled chamber disposed in the associated cylinder on the side of the piston opposite the associated disc, and means are provided for adjusting the pressure of the hydraulic fluid in each of the chambers. In order to provide an indication of the force of the frictional engagement between the piston and disc, each of the disc engaging means is also provided with a pressure gauge which indicates the pressure of the hydraulic fluid therein.

The preferred embodiment of the invention comprises a frame which permits the lever arm to be oriented in a variety of positions so as to permit exercise of various portions of the body, and further, a horizontal bracket is mounted to the frame so as to permit axial and rotational movement of the bracket with respect to the frame, and such that the bracket may be pressed upwardly against a bed frame or other horizontal surface to attach the apparatus to the bed frame or the like during use.

In order that the present invention may be more readily understood, reference will now be made to the accompanying drawings, in which:-

Figure 1 is a side elevational view of a physical therapy apparatus embodying the features of the present invention;

Figure 2 is a fragmentary view taken at right angles to Figure 1 and substantially along the line 2-2 of Figure 1;

Figures 3 and 4 are sectional top plan views taken substantially along the lines 3-3 and 4-4 of Figure 2 respectively;

Figure 5 is a top plan view of the apparatus, with the bottom frame structure omitted for clarity;

Figure 6 is an enlarged fragmentary sectional view taken substantially along the line 6-6 of Figure 5;

Figure 7 is an enlarged fragmentary sectional view taken substantially along the line 7-7 of Figure 5;

Figure 8 is a sectional top plan view taken substantially along the line 8-8 of Figure 1, and illustrating the base frame structure of the apparatus;

Figure 9 is an enlarged fragmentary sectional view taken substantially along the line 9-9 of Figure 8;

Figure 10 is an enlarged fragmentary sectional view taken substantially along the line 10-10 of Figure 8;

Figure 11 is an enlarged fragmentary sectional view taken substantially along the line 11-11 of Figure 10; and

Figure 12 is an enlarged fragmentary sectional view taken substantially along the line 12-12 of Figure 8.

Referring more particularly to the drawings, the illustrated physical therapy apparatus includes an H-shaped base frame member 1 having parallel side members 2 joined by a cross member 3. The base frame member is supported on rollers 4.

Underlying the base frame member 1 is an H-shaped stabilizing or secondary base frame member 5, which includes parallel side members 6 and a cross member 7. A depressing lever 9 is pivotally connected to the parallel members 2 of the base frame member 1 by the pins 8, and the depressing lever 9 includes a lever arm 10 adjacent each member 2 and a connecting bar 11. The lever arms 10 have nodules 10a on their lower edges and intermediate their ends, for contacting the cross member 7 of the frame member 5.

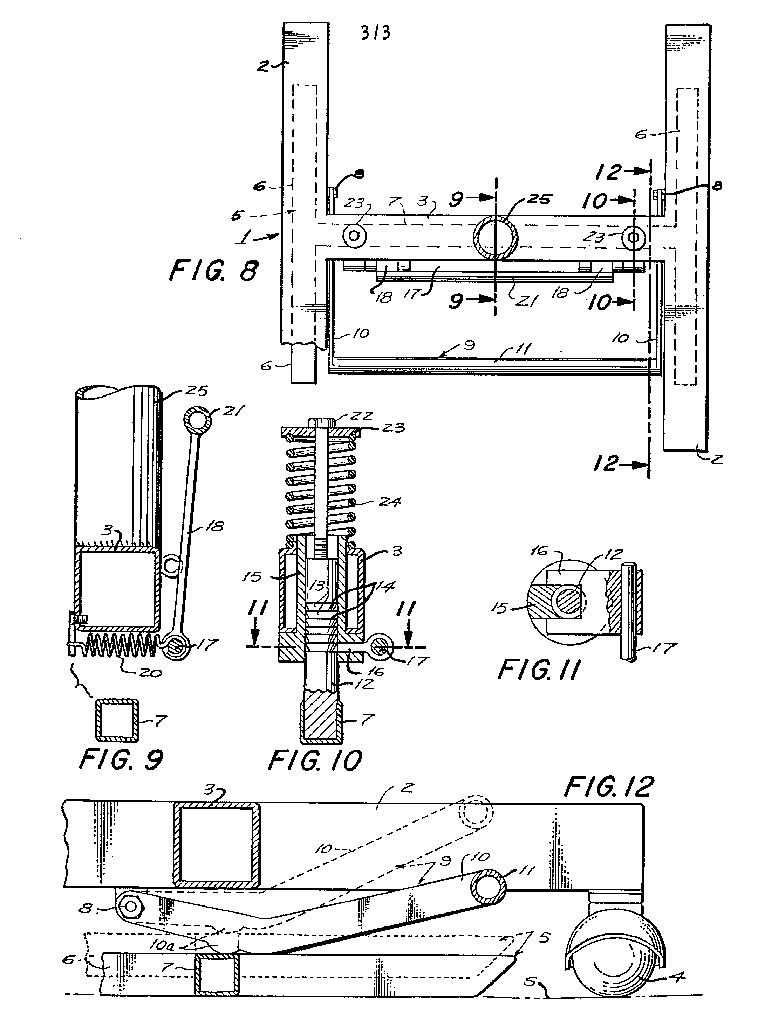

As best seen in Figures 10 and 11, a pair of vertical latching rods 12 are fixed to the cross member 7 of the stabilizing frame member 5, and each of the rods 12 extends upwardly through a guide sleeve 15 in the cross member 3 of the base frame member 1. Each rod 12 includes conical latching elements 13 forming latching shoulders 14, and each guide sleeve 15 is provided with a horizontal slot which receives a keeper plate 16 which is adapted to engage the latching elements 13. The two keeper plates are joined by a connecting bar 17 which extends parallel to the cross members 3 and 7. The connecting bar 17 is provided with spaced lever arms 18 which pivotally contact the cross mem-ber 3 intermediate their ends as shown in Figure 9. The connecting bar is also joined to the underside of the cross member 3 by appropriate springs 20 so that the keeper plates 16 are biased toward the latching elements 13. The upper ends of the lever arms 18 are joined by a cross bar 21.

The upper ends of the latching rods 12 are provided with a coaxial bolt 22 and washer 23. Interposed between the washers 23 and the upper surface of the cross member 3 is a spring 24, so that the springs 24 urge the stabilizing frame member 5 upwardly.

The depressing lever 9 is positioned so that its connecting bar 11 may be engaged by the user's foot, so as to be depressed into engagement with the cross member 7 of the stabilizing frame 5, to thereby move the frame member 5 downwardly against the underlying floor surface S and thereby lift the H-frame member 1 and rollers 4 from the surface S, note Figure 12. In so doing, the keeper plates 16 engage the latching elements 13 of the rods 12, to retain the frame member 5 in the lowered position. Release of the frame member 5 is accomplished by foot engagement with the cross bar 21, which withdraws the keeper plates 16 from the elements 13. The springs 24 then lift the frame member 5 to its original raised position, causing the base frame member 1 and rollers 4 to again engage the ground surface S and support the apparatus.

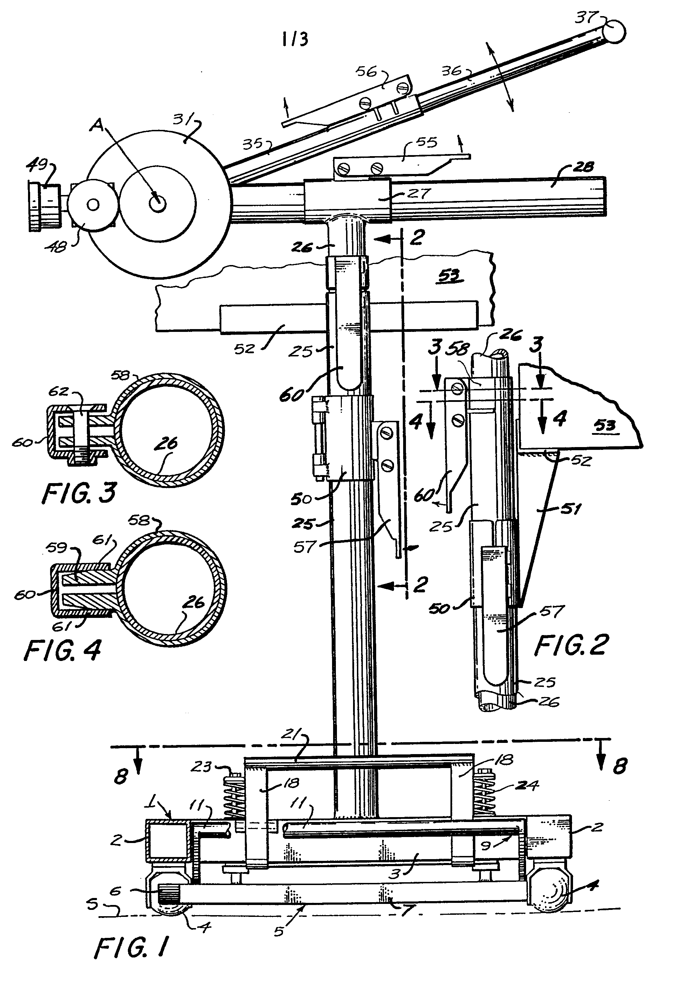

An upright post 25 is fixedly mounted to the cross member 3 of the base frame member, and an extension post 26 is slideably received in the tubular upright post 25 so as to permit relative axial movement and relative rotational movement therebetween. To releasably interconnect the post 25 and extension 26 in a selected axial and rotational orientation, there is provided a split sleeve 58 (Figures 2-4) at the upper end of the post, and which includes a pair of cam lugs 59. A locking handle 60 is pivotally mounted to the pin 62 which extends laterally through the cam lugs 59. The handle 60 includes parallel sides 61 for clamping the lugs laterally toward each other, to thereby close the sleeve 58 upon the extension 26, when the handle is pivoted downwardly to the position shown in the drawings.

A tubular collar 27 is fixed to the upper free end of the extension 26, with the collar being oriented so as to define a horizontal axis. A horizontal tubular arm 28 extends coaxially through the collar 27 so as to permit relative axial movement and relative rotational position. The collar 27 is split, and it will be understood that the handle 55 permits the horizontal arm and collar to be releasably interconnected in a selected axial and rotational orientation by a structural arrangement corresponding to that shown in Figures 3 and 4.

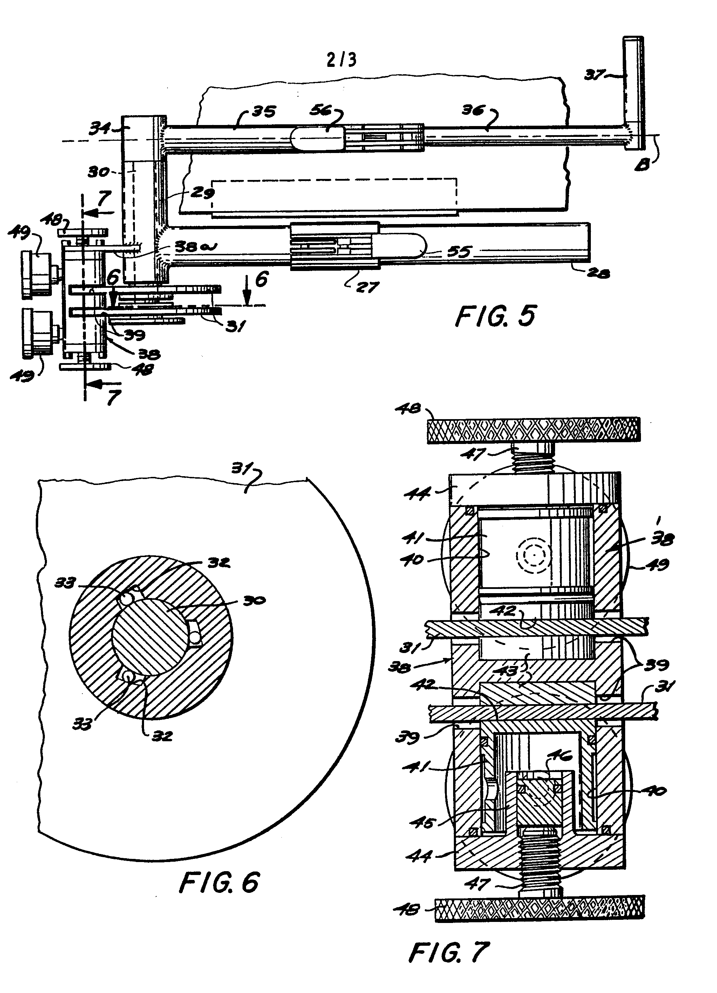

A sleeve 29 is fixedly mounted at one end of the horizontal arm 28 and defines an axis A (Figure 1) which perpendicularly intersects the horizontal axis defined by the sleeve 27 and arm 28. A shaft 30 is rotatably mounted in the sleeve 29, and a lever arm 35, 36 is fixed to the extension 34 of the shaft 30. The lever arm extends radially with respect to the shaft 30 along the axis B (Figure 5), and includes a free end having a transverse handle 37 adapted for engagement by the user, and so that the user may pivot the lever arm and the shaft 30 about the axis A of the sleeve 29 in a back and forth manner. The lever arm comprises a first inner segment 35 which is fixed to the extension 34, and a coaxial outer segment 36 so as to permit relative axial movement and relative rotational movement between the two segments. A handle 56, which also generally corresponds to the structure shown in Figures 3 and 4, is provided for releasably interconnecting the inner segment and the outer segment in a preselected axial and rotational orientation.

The apparatus further includes means for imparting an adjustable resistance to the movement of the lever arm 35, 36 in each of the back and forth directions. This resistance imparting means includes a pair of discs 31 coaxially disposed about the shaft 30. The hubs of the discs 31 are illustrated in Figure 6, and each includes slots 32, with each slot receiving a clutch roller 33. The slots 32 are so configured and arranged that when the shaft 30 is rotated in one direction, one of the discs 31 rotates therewith, and when the shaft 30 is rotated in the opposite direction, the other disc 31 rotates therewith.

The resistance imparting means further includes first and second disc engaging means disposed adjacent respective ones of the discs for frictionally engaging the surface thereof. More particularly, a housing 38 is secured to the sleeve 29 by a bracket 38a, and the housing 38 includes slots 39 which receive peripheral portions of respective ones of the discs 31. As best seen in Figure 7, the housing 38 defines a pair of oppositely directed coaxial cylinders 40, with each cylinder 40 being disposed along an axis parallel to the axis A of the shaft 30 and further being aligned with a peripheral surface portion of the associated disc 31. A piston 41 is slideably received in each cylinder for movement toward and away from the peripheral surface portion of the disc. The two cylinders 40 and pistons 41 are oriented in opposite directions, and the end face 42 of each piston is adapted to engage the surface of the associated disc 31. Also, each end face 42 is disposed in alignment with a back-up pad 43 located on the opposite side of the associated disc 31.

Each cylinder 40 is provided with an end plate 44 secured thereto by appropriate bolts (not shown). Each end plate 44 in turn mounts a pilot cylinder 45 which receives a pilot piston 46. Each end plate 44 is also provided with a threaded bore which is aligned with its pilot cylinder 45, and which receives a threaded shaft 47 having an outer end flange 48.

The cylinders 40 further include a hydraulic fluid filled chamber disposed on the side of the piston opposite the associated disc 31, and the piston 46 and flange 48 thus permit the pressure of the hydraulic fluid in each of the chambers to be adjusted. More particularly, inward movement of the piston 46 in each cylinder increases the pressure therein, and thus increases the friction between the end face 42 of the piston 41 and its associated disc 31. Conversely, outward movement of the piston 46 reduces the force applied to the disc 31. Each of the fluid filled chambers is connected to a corresponding pressure gauge 49, so that the gauges visually indicate the pressure of the hydraulic fluid therein. As will be understood, the above described separately adjustable resistance imparting means for the two discs permits independent variation of the resistance of the shaft 30 and lever arm 35, 36 to angular movement in each direction. Also, the visual pressure indication provided by the two gauges 49 provides assurance that a desired amount of resistance is being applied in each direction. The gauges also facilitate the initial set up of the apparatus, and repeatability of the exercise program, for a particular user.

As shown in Figures 1-3, the apparatus of the present invention further includes provision for releasably securing the apparatus with respect to a bed, table, chair, or other horizontal surface which supports the user. In particular, the vertical post 25 is provided with a vertically slideable sleeve 50, from which extends a vertical arm 51. The upper end of the arm 51 mounts a horizontal bracket 52. As illustrated, the bracket 52 is adapted to engage the lower edge corner of a user's table 53 as shown in Figures 1 and 5, in the manner further described below. In addition, the bracket 50 includes a handle 57 which permits the bracket to be fixed to the post in a selected axial and rotational orientation by an arrangement corresponding to that described above with respect to Figures 3 and 4.

To secure the apparatus to the user's table 53, the apparatus is wheeled to the desired position, and the sleeve 50 of the bracket 52 is adjusted so that the bracket 52 is disposed immediately below the edge of the table 53. The bar 11 of the secondary frame member is then pressed downwardly, causing the base frame member 1 and the rollers 4 to lift upwardly and the bracket 52 to engage the table 53 from below, and thereby slightly lift the table. To remove the apparatus, the bar 21 is engaged to release the secondary frame member, and permit the bracket 52 to fall away from the table 53.

From the above description, it will be apparent that the apparatus of the present invention has the ability to be oriented in a wide variety of positions so as to permit exercise of various portions of the body. As shown in Figures 1 and 5, the apparatus is positioned so as to be suitable for treatment of the user's right arm, assuming that the user is positioned face upward. The apparatus as shown in these figures is secured to the table 53 in position to place the axis A of the shaft 30 in alignment with the right shoulder axis. The axis A may be adjusted vertically by movement of the extension 26 so that the axis A coincides with the user's shoulder axis. The distance between the axis A and the handle 37 may also be adjusted by means of the handle 56 so that the patient may grasp the handle 37 and oscillate his hand and arm about the axis A.

If the user's left arm is to be treated, the apparatus may be placed at the left side of the table, or the position of the user may be reversed (which would permit one side of the table to remain against a wall). The upper portion of the apparatus, including the lever arm, housing 38 and horizontal arm 28, may then be rotated 180° about the vertical axis of the post 25. Also, the pressure adjustment for the two discs would be reversed.

Where only the forearm of the user is to be exercised, the axis A is positioned to coincide with the elbow, and if treatment for the hand and wrist is required, the shaft 30 may be provided with an appropriate extension. Alternatively, the shaft 30 may mount a cross bar, and by aligning the forearm with the axis A, a different exercise of the wrist may be obtained.

Where treatment of the user's leg, or portion thereof, is desired, the apparatus may be positioned in a manner similar to that for arm treatment, except that an appropriate loop may be secured to the lever arm in place of the handle 37.

While for many treatments, the physical therapy apparatus of the present invention may be attached to the table, treatments may also be accomplished with the apparatus freestanding and separate from any table, but with the wheels lifted from the ground surface S in the manner described above.

CLAIMS

1. A physical therapy apparatus adapted to provide a back and forth exercising movement to a portion of the user's body, with the resistance to such back and forth movement being separately adjustable in each direction, and comprising

a supporting frame,

a shaft rotatably mounted to said supporting frame,

a lever arm fixed to said shaft and extending radially therefrom, said lever arm having a free end adapted for engagement by the user and so that the user may pivot said lever arm and shaft about the axis of said shaft in a back and forth manner,

a pair of discs coaxially disposed about said shaft,

first one-way clutch means for rotating one of the discs with the shaft only upon rotation of the shaft in one direction,

second one-way clutch means for rotating the other of said discs with the shaft only upon rotation of the shaft in the other direction,

first and second disc engaging means disposed adjacent respective ones of said discs for frictionally engaging the surface thereof, with each of said disc engaging means including means for separately adjusting the force of the frictional engagement with the surface of the associated disc so as to provide a separately adjustable resistance to the rotation of each disc, and thereby provide a separately adjustable resistance to movement of the lever arm in each direction.

2.  The physical therapy apparatus as defined in Claim 1 wherein each of said first and second disc engaging means comprises a cylinder disposed along an axis parallel to the axis of said shaft and aligned with a peripheral surface portion of the associated disc, and a piston slideably mounted in the cylinder for movement toward and away from the peripheral surface portion of the associated disc and so that the end face of the piston is adapted to frictionally engage the peripheral surface portion of the associated disc.

3.  The physical therapy apparatus as defined in Claim 2 wherein each of said means for separately adjusting the force of the frictional engagement with the surface of the associated disc comprises a hydraulic fluid filled chamber disposed in the associated cylinder on the side of the piston opposite the associated disc, and means for adjusting the pressure of the hydraulic fluid in each of the chambers.

4.  The physical therapy apparatus as defined in Claim 3 wherein each of said means for separately adjusting the force of the frictional engagement with the surface of the associated disc further comprises a pilot cylinder communicating with the chamber, a pilot piston slideably mounted in said pilot cylinder, and means for moving the pilot piston so as to pressurize the hydraulic fluid in the chamber.

5.  The physical therapy apparatus as defined in Claim 2, 3 or 4,wherein said cylinders of said disc engaging means are coaxially aligned, with the associated pistons facing in opposite directions.

6. The physical therapy apparatus as defined in Claim 2, 3, 4 or 5 wherein each of said first and second disc engaging means further comprises a back-up pad mounted on the side of the associated disc opposite the end face of the piston, and so that each disc is clamped between the end face of a piston and a back-up pad.

7. The physical therapy apparatus as defined in Claim 3 wherein each of said first and second disc engaging means further comprises a pressure gauge operatively connected to the associated chamber for visually indicating the pressure of the hydraulic fluid therein.

8. The physical therapy apparatus as defined in any preceding Claim further comprising means rotatably mounting said shaft to said supporting frame so as to permit adjustable movement of said shaft about an axis which perpendicularly intersects the axis of the shaft, and releasable locking means for securing the shaft in a selected angular orientation.

9. A physical therapy apparatus adapted to provide a back and forth exercising movement to a portion of the user's body, and which is characterized by the ability to be oriented in a variety of positions so as to permit exercise of various portions of the body, and comprising

    a base frame member,

    an upright post fixedly mounted to said base frame member,

    an extension post coaxially disposed with respect to said upright post so as to permit relative axial movement and relative rotational movement there between,

means for releasably interconnecting the upright post and post extension in a selected axial and rotational orientation,

a collar fixed to the upper free end of said extension post so as to define a horizontal axis,

a horizontal arm extending coaxially through said collar so as to permit relative axial movement and relative rotational movement therebetween,

means for releasably interconnecting the horizontal arm and said collar in a selected axial and rotational orientation,

a sleeve fixedly disposed to said horizontal arm and defining an axis which perpendicularly intersects said horizontal axis,

a shaft rotatably mounted in said sleeve,

a lever arm fixed to said shaft and extending radially therefrom, said lever arm having a free end adapted for engagement by the user and so that the user may pivot said lever arm and shaft about the axis of said sleeve in a back and forth manner, and

means for imparting an adjustable resistance to the movement of the lever arm in at least one of its back and forth directions.

10. The physical therapy apparatus as defined in Claim 9 wherein said lever arm comprises a first innner segment which is fixed to said shaft and an outer segment coaxially disposed with respect to said inner segment so as to permit relative axial movement and relative rotational movement therebetween, and means for releasably interconnecting the inner segment and outer segment in a preselected axial and rotational orientation.

0154732

11. The physical therapy apparatus as defined in Claim 9 or 10 wherein said apparatus further comprises a horizontal bracket, and means for releasably interconnecting said horizontal bracket and said upright post so as to permit axial movement of the bracket with respect to said upright post and rotational movement of said bracket about the axis of said upright post, and such that said bracket may be interconnected to said upright post in a selected axial and rotational orientation.

12. The physical therapy apparatus as defined in Claim 9, 10 or 11 wherein said means for imparting an adjustable resistance to the movement of the lever arm in at least one of its back and forth directions comprises

a pair of discs coaxially disposed about said shaft,

first one way clutch means for rotating one of the discs with the shaft only upon rotation of the shaft in one direction,

second one way clutch means for rotating the other of said discs with the shaft only upon rotation of the shaft in the other direction, and

first and second disc engaging means disposed adjacent respective ones of said discs for frictionally engaging the surface thereof.

13. The physical therapy apparatus as defined in Claim 12 wherein each of said disc engaging means further includes means for separately adjusting the force of the frictional engagement with the surface of the associated disc so as to provide a separately adjustable resistance to the rotation of each disc, and thereby provide a separately adjustable resistance to movement of the lever arm in each direction.

14. A portable physical therapy apparatus adapted to provide a back and forth exercising movement to a portion of the user's body, and which is characterized by the ability to be readily attached to a bed or other horizontal surface, and comprising

a first base frame member,

an upright post fixedly mounted to said first base frame member,

a plurality of rollers mounted to said base frame member to permit the apparatus to be rolled along the ground surface,

a secondary base frame member,

means moveably mounting said secondary base frame member to said first base frame member for movement between a raised position wherein said rollers contact the ground surface, and a lowered position wherein said secondary base frame member contacts the ground and the rollers and first base frame member are lifted from the ground surface so as to prevent rolling movement of the apparatus,

a bracket adapted to engage a bed frame or other horizontal surface,

means mounting said bracket to said upright post so that said bracket extends in a generally horizontal direction,

a shaft rotatably mounted to said upright post,

a lever arm fixed to said shaft and extending radially therefrom, said lever arm having a free end adapted for engagement by the user and so that the user may pivot said lever arm and shaft about the axis of said shaft in a back and forth manner, and

means for imparting adjustable resistance to the movement of the lever arm in at least one of its back and forth directions.

15.  The physical therapy apparatus as defined in Claim 14 wherein said means mounting said bracket to said upright post includes means for releaseably interconnecting said bracket and post so as to permit axial movement of the bracket with respect to said post and rotational movement of said bracket about the axis of said post, and such that said bracket may be interconnected to said upright post in a selected axial and rotational orientation.

0154732

1/3

FIG. 3

FIG. 4

FIG. 2

FIG. 1

0154732

2/3

**FIG. 5**

**FIG. 6**

**FIG. 7**

0154732

3/3

FIG. 8

FIG. 9

FIG. 10

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 921 791 (W.E. BERNE) * Figures 1,15; column 3, lines 25-34; column 5, line 69 - column 6, line 14; column 8, lines 67-69 * | 1,8 | A 63 B 21/00 |
| Y | | 2,3,6, 7 | |
| A | | 9,14 | |
| | --- | | |
| Y | US-A-3 103 357 (W.E. BERNE) * Figure 3; column 2, line 70 - column 3, line 10; column 3, line 50 - column 4, line 15 * | 2,3,6, 7 | |
| | --- | | TECHNICAL FIELDS SEARCHED (Int. Cl.4) |
| A,D | US-A-2 777 439 (E.F. TUTTLE) * Column 1, lines 43-48; column 4, lines 3-15 * | 1 | A 63 B 21/00 A 63 B 23/04 A 61 H 1/02 A 61 B 5/10 |
| | ----- | | |

The present search report has been drawn up for all claims

| Place of search THE HAGUE | Date of completion of the search 11-11-1984 | Examiner GERARD B.E. |
|---|---|---|